# EUROPÄISCHE PATENTSCHRIFT

(11) **EP 1 447 309 B1**
(45) Veröffentlichungstag und Bekanntmachung des Hinweises auf die Patenterteilung: **27.02.2008**
(21) Anmeldenummer: 04000467.3
(22) Anmeldetag: 13.01.2004
(51) Int. Cl.: B62D 21/10, B62D 25/20

(54) **Bodenversteifungsstruktur an Kraftfahrzeugen**
Floor-stiffening structure in motor vehicles
Structure de renfort de sol pour automobile

(30) Priorität: 08.02.2003 DE 10305238
(43) Veröffentlichungstag der Anmeldung: 18.08.2004
(73) Patentinhaber: Volkswagen Aktiengesellschaft, 38436 Wolfsburg (DE)
(72) Erfinder: Welsch, Frank, Dr., 38179 Schwülper (DE); Lohmann, Bernhard, 38518 Gifhorn (DE); Sattler, Hans-Joachim, 38468 Ehra-Lessien (DE)

(56) Entgegenhaltungen:
- EP-A- 1 382 514
- DE-A- 10 014 837
- DE-A- 19 860 032
- US-A- 5 102 187
- US-A- 5 354 115
- PATENT ABSTRACTS OF JAPAN Bd. 2002, Nr. 03, 3. April 2002 (2002-04-03) & JP 2001 322567 A (DAIHATSU MOTOR CO LTD), 20. November 2001 (2001-11-20)
- PATENT ABSTRACTS OF JAPAN Bd. 0182, Nr. 45 (M-1603), 11. Mai 1994 (1994-05-11) & JP 6 032255 A (MAZDA MOTOR CORP), 8. Februar 1994 (1994-02-08)

## Beschreibung

Die Erfindung betrifft eine Bodenversteifungsstruktur an Kraftfahrzeugen nach dem Oberbegriff des Anspruchs 1.

Bodenversteifungsstrukturen an Kraftfahrzeugen sind in den vielfältigsten Ausführungsformen bekannt.
Aus der DE 196 34 601 A1 werden beispielsweise vordere, nahe des Mitteltunnels angeordnete Längsträger einer Fahrzeugkarosseriestruktur offenbart, die stumpf an ein an sich bekanntes Fersenblech angeschlossen sind oder unterhalb desselben abschließen. Infolge eines Frontalcrashes werden Crashenergien vermittels besagter Längsträger überwiegend in das Fersenblech geleitet, welches zu für die Insassen undefinierten kritischen Karosserieverformungen führen kann.
Des Weiteren ist es aus der DE 198 60 007 A1 bekannt, zur Versteifung der Fahrzeugstruktur im hinteren Bodenbereich derselben ein geschlossenes, kastenförmiges Strukturelement mit im Wesentlichen ebenen Begrenzungswänden anzuordnen. Ferner sind dieser Druckschrift vordere Längsträger zu entnehmen, die ihrerseits ebenfalls an das durch das Strukturelement ausgebildete Fersenblech angeschlossen sind. Sicherlich wird durch diese Maßnahme ein stabiler hinterer Bodenbereich geschaffen, jedoch wird dieser als äußerst kostenintensiv und aufwendig eingeschätzt. Weiterhin ist davon auszugehen, dass infolge des vorstehend äußerst steifen Strukturelementes Crashenergien im Wesentlichen durch den Vorderwagen respektive durch die vorderen Längsträger absorbiert werden und demgemäß mit undefinierten Verformungen derselben insbesondere im hinteren Fußbereich zu rechnen ist.
Mit der DE 198 60 032 A1 wird eine Fahrzeugstruktur offenbart, die ihrerseits ein etwa vertikal verlaufendes Fersenblech vorsieht. Ein mittlerer Querträger auf Höhe des Fersenbleches liegt auf der Oberseite seitlicher Längsträger (Schweller) auf. Die Schweller setzen sich jeweils aus einer Innenschale sowie einer Außenschale zusammen, zwischen denen zur Anbindung an Säulenelemente ein vertikal angeordnetes Zwischenblech vorgesehen ist. Vordere Längsträgerelemente stützen sich an diesem äußerst steifen Hinterwagenbereich ab. Auch hier ist davon auszugehen, dass Crashenergien vornehmlich durch den Vorderwagen und die vorderen Längsträger, wie Sitzlängsträger und Tunnelträger, infolge Verformung derselben absorbiert werden und der Hinterwagenbereich von einer wirkungsvollen Energieabsorbtion infolge eines Frontalcrashes ausgeschlossen ist.

Mit der DE 195 28 874 C2 und der DE 197 46 238 A1 sind Tragstrukturen für Kraftfahrzeuge offenbart, die ihrerseits vom Vorder- zum Hinterwagen durchgängig ausgebildete Längsträger umfassen, die aufgrund ihrer hohen Festigkeit weniger geeignet sind Crashenergie aus einem Frontalcrash zu absorbieren, so dass es sich erforderlich macht, zusätzliche Energieabsorbtionsmittel, wie beispielsweise sogenannte Faltenbeulrohre (DE 197 46 238 A1) vorzusehen.

Schließlich ist aus der älteren EP 1 382 514 A1 eine Bodenstruktur an Kraftfahrzeugen mit hutförmigen unteren Tunnel-Verstärkungselementen bekannt, welche ihrerseits von unten gegen das Bodenblech gesetzt sind und sich von einem vorderen Bodenquerträger nach hinten bis wenigstens in Höhe von Sitzquerträgern, vorzugsweise bis zu einem Fersenblech im unmittelbaren Bereich eines hinteren Bodenquerträgers erstrecken.

Aufgabe der vorliegenden Erfindung ist es, eine Bodenversteifungsstruktur der gattungsgemäßen Art derart zu verbessern, dass für die Insassen kritische Karosserieverformungen infolge eines Frontalcrashes weitestgehend vermieden werden, wobei zum einen bei Erhaltung einer für die Insassen sicheren Fahrgastzelle der Hinterwagen wirkungsvoll in die Energieabsorption mit eingebunden, d. h., Verformungsenergie auch maßgeblich durch den Hinterwagen aufgenommen werden, zum anderen eine wirkungsvolle Schwingungsreduzierung des Fahrzeugbodens und demzufolge auch eine Schallreduzierung in der Fahrgastzelle des Kraftfahrzeugs realisiert werden soll.

Ausgehend von einer Bodenversteifungsstruktur an Kraftfahrzeugen, umfassend ein in die Fahrgastzelle des Kraftfahrzeugs nach unten abschließendes Bodenblech, wobei das Bodenblech im hinteren Bereich der Fahrgastzelle entweder einstückig in ein nach oben weisendes Fersenblech übergeht oder an ein solches gesondert gefertigtes Fersenblech fest angeschlossen ist, und wobei dem Bodenblech wenigstens ein von unten gegengesetztes Längsträgerelement zugeordnet ist, wird die gestellte Aufgabe dadurch gelöst, dass das wenigstens eine von unten gegengesetzte Längsträgerelement sich bis in die nach oben weisende Struktur des Fersenbleches hinein erstreckt und mit diesem und dem Bodenblech fest verbunden ist sowie zur Erzielung eines weichen Belastungs- und Spannungsübergangs in das Fersenblech in Fahrzeuglängsrichtung gesehen im Bereich des Fersenbleches von einer Hohlprofilstruktur in eine flächige und sich an die Struktur des Fersenbleches anschmiegende Struktur übergeht.

Gemäß einer ersten Ausführungsvariante ist das Längsträgerelement ein sich über die gesamte Länge des Bodenbleches sich erstreckender und dasselbe versteifender Längsträger, der derart ausgebildet und angeordnet ist, dass bei einem Frontalcrash die Verformungsenergie vom Vorderwagen ausgehend nach hinten in einen für die Fahrzeuginsassen unkritischen Bereich ab dem besagten Fersenblech leitbar ist.

Das Längsträgerelement kann dabei entweder ein Längsträger sein, der sich durchgängig vom Vorderwagen nach hinten bis in die nach oben weisende Struktur des Fersenbleches hinein erstreckt, oder ein Längsträger, der an einem vorderen Querträger angeschlossen ist und sich ebenfalls nach hinten bis in die nach oben weisende Struktur des Fersenbleches hinein erstreckt. Nach einer weiteren Ausführungsvariante ist das Längsträgerelement als ein das Bodenblech versteifender Längsträger ausgebildet, der, einen Teilbereich der Längserstreckung des Bodenbleches überdeckend, sich nach hinten bis in die nach oben weisende Struktur des Fersenbleches hinein erstreckt. Schließlich ist vorgesehen, das Längsträgerelement als Versteifungselement eines im Bodenblech angeordneten oder durch das Bodenblech ausgebildeten und sich in Fahrzeuglängsrichtung sich erstreckenden Mitteltunnels auszuführen. Weiterhin wird im Sinne der Erfindung vorgeschlagen, dass das Längsträgerelement aus umgeformten Stahlblech besteht und ggf. nach der tailored-blank-Technik gefertigt ist. Wie die Erfindung weiter vorsieht, kann es auch angezeigt sein, das Längsträgerelement aus höherfestem Stahl auszubilden. Eine weitere vorteilhafte Ausgestaltung sieht vor, dass das Längsträgerelement wenigstens bereichsweise ein im Querschnitt offenes Hohlprofil aufweist. Ebenso kann es von Vorteil sein, das Längsträgerelement selbst mit Versteifungssicken und/oder Versteifungsstegen zu versehen.

Schließlich ist vorgesehen, dass das Längsträgerelement mit dem Bodenblech und dem Fersenblech verschweißt, verklebt oder vermittels an sich bekannter mechanischer Verbindungselemente fest verbunden ist.

Die vorgeschlagene Bodenversteifungsstruktur hat im Hinblick auf herkömmliche den wesentlichen Vorteil, dass Verformungsenergie infolge eines Frontalcrashes vorteilhaft unterhalb der Fahrgastzelle bis in den Hinterwagen, d. h, bis in einen für die Fahrzeuginsassen unkrittischen Bereich ab dem Fersenblech geleitet und durch diesen absorbiert werden kann, derart, dass das Fersenblech und die nachfolgenden Karosseriebereiche nach hinten verformt werden und der hintere Fußraum erhalten bleibt. Weiterhin ist infolge der mit dem Bodenblech und dem angeschlossenen Fersenblech fest verbundenen Trägerelemente eine Schwingungsreduzierung des Boden- und Fersenbleches sowie eine akustische Verbesserung der Fahrgastzelle an sich zu verzeichnen.

Die Erfindung wird nachstehend anhand der in den Zeichnungen schematisch dargestellten Ausführungsbeispiele näher erläutert. Es zeigen:
- Figur 1: die Bodenversteifungsstruktur eines Kraftfahrzeugs in einer Ansicht von unten,
- Figur 2: die Einzelheit "Z" nach Fig. 1,
- Figur 3: den Schnitt I-I nach Fig. 1.

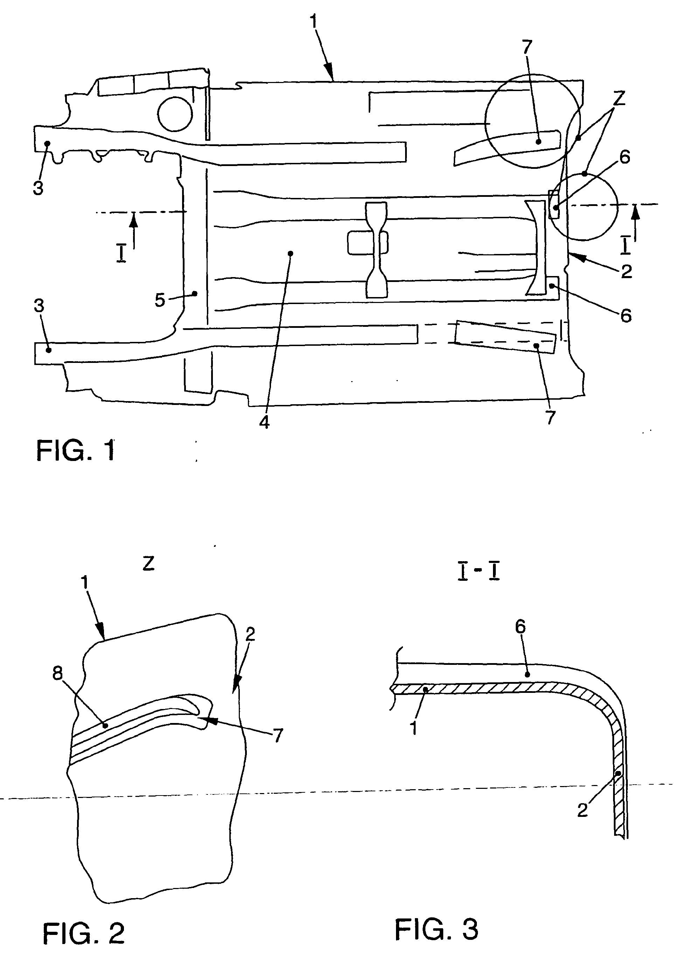

Im Wesentlichen ist der Fig.1 ein eine nicht näher dargestellte Fahrgastzelle eines Kraftfahrzeugs nach unten abschließendes Bodenblech 1 zu entnehmen, welches vorliegend im hinteren Bereich in ein nach oben weisendes Fersenblech 2 übergeht, demgemäß mit demselben einstückig ausgebildet ist. Selbstverständlich besteht auch die Möglichkeit, das Fersenblech 2 gesondert zu fertigen und mit dem Bodenblech 1 durch Schweißung, Klebung oder vermittels an sich bekannter mechanischer Verbindungselemente, wie Nieten o. ä. fest zu verbinden.
Des Weiteren sind zwei beidseitig der Längsmittenachse des Kraftfahrzeugs angeordnete und das nicht näher dargestellte Antriebsaggregat abstützende Längsträgerelemente 3 gezeigt, die sich vom Vorderwagen ausgehend bis in das Bodenbleches 1 hinein erstrecken und mit diesem fest verbunden sind, vorzugsweise verschweißt.
Fernerhin ist im Bodenblech 1 ein hutförmig in die Fahrgastzelle weisender und sich in Fahrzeuglängsrichtung sich erstreckender Mitteltunnel 4 angeordnet oder wie vorliegend durch das Bodenblech 1 selbst ausgebildet sowie fest an einem an sich bekannten vorderen Querträger 5 angeschlossen.
Um dem Bodenblech 1 eine erhöhte Steifigkeit zu verleihen, sind demselben wenigstens ein, vorliegend vier von unten gegengesetzte Längsträgerlemente 6, 7 zugeordnet, welche sich erfindungsgemäß bis in die nach oben weisende Struktur des Fersenbleches 2 hinein erstrecken und mit dem Bodenblech 1 und dem Fersenblech 2 fest verbunden, vorzugsweise verschweißt sind (Fig. 2). Weitere an sich bekannte Fügeverfahren, wie Kleben sowie mechanische Verbindungselemente sind ebenfalls denkbar.
Wie aus Fig. 1 noch ersichtlich, ist das Längsträgerelement 6 am vorderen Querträger 5 angeschlossen und stellt sozusagen einen sich über die gesamte Länge des Bodenbleches 1 erstreckenden und dasselbe versteifenden Längsträger dar, der derart ausgebildet und angeordnet ist, dass bei einem Frontalcrash die Verformungsenergie vom Vorderwagen ausgehend über den vorderen Querträger 5 und die Längsträgerelemente 6 nach hinten in einen für die Fahrzeuginsassen unkrittischen Bereich ab bzw. hinter dem Fersenblech 2 geleitet wird, indem, wie bereits oben dargetan, das Fersenblech 2 und die nachfolgenden Karosseriebereiche, die Crashenergie absorbierend, nach hinten verformt werden. Im Ergebnis wird insbesondere der hintere Fußraum weitestgehend in seiner Gestalt erhalten.
Aufgrund der Tatsache, dass die Längsträgerelemente 6 im unmittelbaren Anschlußrespektive Verbindungsbereich von Bodenblech 1 und Mitteltunnel 4 angeordnet sind, fungieren diese in vorteilhafter Weise gleichzeitig als Versteifungselemente für besagten Mitteltunnel 4.
Für den Fachmann sicherlich leicht nachvollziehbar, besteht des Weiteren auch die Möglichkeit und wird durch die Erfindung mit erfaßt, die Längsträgerelemente 3 derart verlängert auszubilden, dass diese sich durchgängig vom Vorderwagen nach hinten bis in die nach oben weisende Struktur des Fersenbleches 2 hinein erstrecken, um die Weiterleitung von Verformungsenergie bis in den Hinterwagen zu gewährleisten (gestrichelt gezeichnet).
Ebenso kann es auch angezeigt sein, Längsträgerelemente 7 als ausschließlich das Bodenblech 1 versteifende Längsträger vorzusehen, die "lediglich" einen Teilbereich der Längserstreckung des Bodenbleches 1 überdecken und sich nach hinten bis in die nach oben weisende Struktur des Fersenbleches 2 hinein erstrecken. Neben einer vorteilhaften Versteifung des gewählten Bereiches des Bodenbleches 1 samt Fersenblech 2 sind verminderte Schwingungen dieser Karosseriebauteile zu verzeichnen, woraus wiederum eine Minderung der Geräuschbelastung der Fahrzeuginsassen resultiert.

Was die Längsträgerelemente 3, 6, 7 weiter anbelangt, sind diese ein- oder mehrteilig vorzugsweise aus Stahlblech gefertigt, wobei zur definierten Einstellung der Steifigkeit respektive Festigkeit der Längsträgerelemente 3, 6, 7 dieselben nach der an sich bekannten tailored-blank-Technik gefertigt sein können. Selbstverständlich können die Längsträgerelemente 3, 6, 7 auch aus höherfestem Stahl bestehen, um im Crashfall eine Verformung derselben zu vermeiden und die Energieabsorbtion auf den Vorderwagen und den Hinterwagen zu beschränken sowie die Fahrgastzelle vor Deformationen zu schützen.

Wie insbesondere aus den Fig. 2 und 3 zu entnehmen ist, sind vorliegend die Längsträgerelemente 6, 7 als im Querschnitt offene Hohlprofile respektive mit einer oder mehreren, vorliegend einer längsverlaufenden und nach außen weisenden Versteifungssicke 8 ausgebildet.
Denkbar ist es jedoch auch, zur Erhöhung der Steifigkeit nicht näher dargestellte Versteifungsstege vorzusehen.

In umfangreichen Versuchen hat es sich fernerhin als zweckmäßig erwiesen, besagte Längsträgerelemente 3, 6, 7 derart auszubilden, dass zur Erzielung eines weichen Belastungs- und Spannungsübergangs in das Fersenblech 2 dieselben im Bereich des Fersenbleches 2 von der besagten Hohlprofilstruktur in eine flächige und sich an die Struktur des Fersenbleches 2 sich anschmiegende Struktur übergehen (Fig. 3).

## Patentansprüche

1. Bodenversteifungsstruktur an Kraftfahrzeugen, umfassend ein die Fahrgastzelle des Kraftfahrzeugs nach unten abschließendes Bodenblech (1), wobei das Bodenblech (1) im hinteren Bereich der Fahrgastzelle entweder einstückig in ein nach oben weisendes Fersenblech (2) übergeht oder an ein solches gesondert gefertigtes Fersenblech (2) fest angeschlossen ist, und wobei dem Bodenblech (1) wenigstens ein von unten gegengesetztes Längsträgerelement (3, 6, 7) zugeordnet ist,
**dadurch gekennzeichnet, dass**
das wenigstens eine von unten gegengesetzte Längsträgerelement (3, 6, 7) sich bis in die nach oben weisende Struktur des Fersenbleches (2) hinein erstreckt und mit diesem und dem Bodenblech (1) fest verbunden ist sowie zur Erzielung eines weichen Belastungs- und Spannungsübergangs in das Fersenblech (2) in Fahrzeuglängsrichtung gesehen im Bereich des Fersenbleches (2) von einer Hohlprofilstruktur in eine flächige und sich an die Struktur des Fersenbleches (2) anschmiegende Struktur übergeht.

2. Bodenversteifungsstruktur nach Anspruch 1,
**dadurch gekennzeichnet, dass**
das Längsträgerelement (3, 6) ein sich über die gesamte Länge des Bodenbleches (1) erstreckender und dasselbe versteifender Längsträger ist, der derart ausgebildet und angeordnet ist, dass bei einem Frontalcrash die Verformungsenergie vom Vorderwagen ausgehend nach hinten in einen für die Fahrzeuginsassen unkrittischen Bereich ab dem besagten Fersenblech (2) leitbar ist.

3. Bodenversteifungsstruktur nach Anspruch 2,
**dadurch gekennzeichnet, dass**
das Längsträgerelement (3) ein Längsträger ist, der sich durchgängig vom Vorderwagen nach hinten bis in die nach oben weisende Struktur des Fersenbleches (2) hinein erstreckt.

4. Bodenversteifungsstruktur nach Anspruch 2,
**dadurch gekennzeichnet, dass**
das Längsträgerelement (6) ein Längsträger ist, der an einem vorderen Querträger angeschlossen ist und sich nach hinten bis in die nach oben weisende Struktur des Fersenbleches (2) hinein erstreckt.

5. Bodenversteifungsstruktur nach Anspruch 1,
**dadurch gekennzeichnet, dass**
das Längsträgerelement (7) ein das Bodenblech (1) versteifender Längsträger ist, der, einen Teilbereich der Längserstreckung des Bodenbleches (1) überdeckend, sich nach hinten bis in die nach oben weisende Struktur des Fersenbleches (2) hinein erstreckt.

6. Bodenversteifungsstruktur nach einem der Ansprüche 1 bis 5,
**dadurch gekennzeichnet, dass**,
das Längsträgerelement (6) ein Versteifungselement eines im Bodenblech (1) angeordneten oder durch das Bodenblech (1) ausgebildeten und sich in Fahrzeuglängsrichtung sich erstreckenden Mitteltunnels (4) ist.

7. Bodenversteifungsstruktur nach einem der Ansprüche 1 bis 6,
**dadurch gekennzeichnet, dass**
das Längsträgerelement (3, 6, 7) aus umgeformten Stahlblech besteht.

8. Bodenversteifungsstruktur nach einem der Ansprüche 1 bis 6,
**dadurch gekennzeichnet, dass**
das Längsträgerelement (3, 6, 7) aus umgeformten Stahlblech, welches nach der tailored-blank-Technik gefertigt ist, besteht.

9. Bodenversteifungsstruktur nach einem der Ansprüche 1 bis 8,
**dadurch gekennzeichnet, dass**
das Längsträgerelement (3, 6, 7) aus höherfestem Stahl besteht.

10. Bodenversteifungsstruktur nach einem der Ansprüche 1 bis 9,
**dadurch gekennzeichnet, dass**
das Längsträgerelement (3, 6, 7) wenigstens bereichsweise ein im Querschnitt offenes Hohlprofil aufweist.

11. Bodenversteifungsstruktur nach einem der Ansprüche 1 bis 10,
**dadurch gekennzeichnet, dass**
das Längsträgerelement (3, 6, 7) mit Versteifungssicken (8) und/oder Versteifungsstegen versehen ist.

12. Bodenversteifungsstruktur nach einem der Ansprüche 1 bis 11,
**dadurch gekennzeichnet, dass**
das Längsträgerelement (3, 6, 7) mit dem Bodenblech (1) und dem Fersenblech (2) verschweißt, verklebt oder vermittels an sich bekannter mechanischer Verbindungselemente fest verbunden ist.

## Claims

1. Floor-stiffening structure in motor vehicles, comprising a floor panel (1) which closes off the passenger cell of the motor vehicle downwards, wherein, in the rear region of the passenger cell, the floor panel (1) either merges integrally into an upwardly pointing heel plate (2) or is connected fixedly to a heel plate (2) of this type which is manufactured separately, and wherein the floor panel (1) is assigned at least one longitudinal member element (3, 6, 7) which is placed against it from below, **characterized in that** the at least one longitudinal member element (3, 6, 7) which is placed against the floor panel from below extends into the upwardly pointing structure of the heel plate (2) and is connected fixedly thereto and to the floor panel (1), and, in order to obtain a gentle loading and stress transition into the heel plate (2), merges, as seen in the longitudinal direction of the vehicle, in the region of the heel plate (2) from a hollow profile structure into a planar structure nestling against the structure of the heel plate (2).

2. Floor-stiffening structure according to Claim 1, **characterized in that** the longitudinal member element (3, 6) is a longitudinal member which extends over the entire length of the floor panel (1) and stiffens the same and is designed and arranged in such a manner that, in the event of a head-on crash, the deformation energy can be conducted from the forward car section to the rear into a noncritical region for the vehicle occupants proceeding from said heel plate (2).

3. Floor-stiffening structure according to Claim 2, **characterized in that** the longitudinal member element (3) is a longitudinal member which extends continuously from the forward car section to the rear into the upwardly pointing structure of the heel plate (2).

4. Floor-stiffening structure according to Claim 2, **characterized in that** the longitudinal member element (6) is a longitudinal member which is connected to a front cross member and extends to the rear into the upwardly pointing structure of the heel plate (2).

5. Floor-stiffening structure according to Claim 1, **characterized in that** the longitudinal member element (7) is a longitudinal member which stiffens the floor panel (1) and, covering a subregion of the longitudinal extent of the floor panel (1), extends to the rear into the upwardly pointing structure of the heel plate (2).

6. Floor-stiffening structure according to one of Claims 1 to 5, **characterized in that** the longitudinal member element (6) is a stiffening element of a central tunnel (4) which is arranged in the floor panel (1) or is formed by the floor panel (1) and extends in the longitudinal direction of the vehicle.

7. Floor-stiffening structure according to one of Claims 1 to 6, **characterized in that** the longitudinal member element (3, 6, 7) consists of formed sheet steel.

8. Floor-stiffening structure according to one of Claims 1 to 6, **characterized in that** the longitudinal member element (3, 6, 7) consists of formed sheet steel which is produced according to the tailored blank technique.

9. Floor-stiffening structure according to one of Claims 1 to 8, **characterized in that** the longitudinal member element (3, 6, 7) consists of high-strength steel.

10. Floor-stiffening structure according to one of Claims 1 to 9, **characterized in that** the longitudinal member element (3, 6, 7) has, at least in some regions, a hollow profile which is open in cross section.

11. Floor-stiffening structure according to one of Claims 1 to 10, **characterized in that** the longitudinal member element (3, 6, 7) is provided with stiffening beads (8) and/or stiffening webs.

12. Floor-stiffening structure according to one of Claims 1 to 11, **characterized in that** the longitudinal member element (3, 6, 7) is welded, adhesively bonded or connected fixedly by means of mechanical connecting elements which are known per se to the floor panel (1) and the heel plate (2).

## Revendications

1. Structure de rigidification de plancher de véhicule automobile, qui comprend une tôle de plancher (1) qui délimite le bas de l'habitacle du véhicule automobile, la tôle de plancher (1) se prolongeant d'un seul tenant dans la partie arrière de l'habitable en une tôle de talon (2) tournée vers le haut ou étant raccordée solidairement à une tôle de talon (2) fabriquée séparément, au moins un élément de longeron (3, 6, 7) orienté vers le bas étant associé à la tôle de plancher (1),
**caractérisée en ce que**
au moins un élément de longeron (3, 6, 7) orienté vers le bas s'étend jusque dans la structure de la tôle de talon (2) tournée vers le haut et est relié solidairement à cette dernière et à la tôle de plancher (1) et **en ce que** pour obtenir une transition douce des sollicitations et des contraintes dans la tôle de talon (2), il se transforme dans le sens de la longueur du véhicule et dans la zone de la tôle de talon (2) d'une structure en profilé creux en une structure plate qui épouse la structure de la tôle de talon (2).

2. Structure de rigidification de plancher selon la revendication 1, **caractérisée en ce que** l'élément de longeron (3, 6) est un longeron qui s'étend sur toute la longueur de la tôle de plancher (1) et qui rigidifie cette dernière, qui est configuré et disposé de telle sorte qu'en cas de choc frontal, l'énergie de déformation partant de l'avant du véhicule en direction de l'arrière peut être amenée à partir de ladite tôle de talon (2) dans une zone non critique pour les passagers du véhicule.

3. Structure de rigidification de plancher selon la revendication 2, **caractérisée en ce que** l'élément de longeron (3) est un longeron qui s'étend en continu de l'avant à l'arrière du véhicule, jusque dans la structure de la tôle de talon (2) tournée vers le haut.

4. Structure de rigidification de plancher selon la revendication 2, **caractérisée en ce que** l'élément de longeron (6) est un longeron raccordé à une traverse avant et s'étend vers l'arrière du véhicule jusque dans la structure de la tôle de talon (2) tournée vers le haut.

5. Structure de rigidification de plancher selon la revendication 1, **caractérisée en ce que** l'élément de longeron (7) est un longeron qui rigidifie la tôle de plancher (1) et qui, en recouvrant une partie de l'extension de la longueur de la tôle de plancher (1), s'étend vers l'arrière jusque dans la structure de la tôle de talon (2) tournée vers le haut.

6. Structure de rigidification de plancher selon l'une des revendications 1 à 5, **caractérisée en ce que** l'élément de longeron (6) est un élément de rigidification d'un tunnel central (4) disposé dans la tôle de plancher (1) ou formé par la tôle de plancher (1) et qui s'étend dans le sens de la longueur du véhicule.

7. Structure de rigidification de plancher selon l'une des revendications 1 à 6, **caractérisée en ce que** l'élément de longeron (3, 6, 7) est constitué d'une tôle d'acier non façonnée.

8. Structure de rigidification de plancher selon l'une des revendications 1 à 6, **caractérisée en ce que** l'élément de longeron (3, 6, 7) est constitué d'une tôle d'acier non façonnée fabriquée par la technique du flan taillé sur mesure.

9. Structure de rigidification de plancher selon l'une des revendications 1 à 8, **caractérisée en ce que** l'élément de longeron (3, 6, 7) est constitué d'acier à haute résistance.

10. Structure de rigidification de plancher selon l'une des revendications 1 à 9, **caractérisée en ce qu'**au moins certaines parties de l'élément de support longitudinal (3, 6, 7) présentent un profil creux ouvert en coupe transversale.

11. Structure de rigidification de plancher selon l'une des revendications 1 à 10, **caractérisée en ce que** l'élément de longeron (3, 6, 7) est doté de moulures de rigidification (8) et/ou de nervures de rigidification.

12. Structure de rigidification de plancher selon l'une des revendications 1 à 11, **caractérisée en ce que** l'élément de longeron (3, 6, 7) est relié solidairement à la tôle de plancher (1) et à la tôle de talon (2) par soudage, collage ou au moyen d'éléments mécaniques de liaison connus en soi.
